Europäisches Patentamt

European Patent Office

Office européen des brevets

(19)

(11) Numéro de publication: **0 297 974**
**B1**

(12) **FASCICULE DE BREVET EUROPEEN**

(45) Date de publication du fascicule du brevet:
17.10.90

(51) Int. Cl.⁵: **F16F 13/00**

(21) Numéro de dépôt: 88401653.6

(22) Date de dépôt: **28.06.88**

---

(54) Perfectionnements apportés aux supports antivibratoires hydrauliques.

---

(30) Priorité: **01.07.87 FR 8709320**

(43) Date de publication de la demande:
**04.01.89 Bulletin 89/1**

(45) Mention de la délivrance du brevet:
**17.10.90 Bulletin 90/42**

(84) Etats contractants désignés:
**BE DE ES GB IT NL SE**

(56) Documents cités:
**EP-A- 0 216 082**
**DE-A- 3 340 152**
**DE-A- 3 436 534**
**FR-A- 2 547 378**

**PATENT ABSTRACTS OF JAPAN,**
**vol. 9, no. 60 (M-**
**364)[1783], 16 mars 1985, page 63 M 364; &**
**JP-A-59 194 141 (TOYODA GOSEI K.K.) 02-11-1984**
**PATENT ABSTRACTS OF JAPAN,**
**vol. 8, no. 230 (M-333)[1667], 23 octo-**
**bre 1984, page 87 M 333; & JP-A-59 110 931 (TOYODA**
**GOSEI K.K.) 27-06-1984**

(73) Titulaire: **HUTCHINSON, 2 rue Balzac, F-75008 Paris(FR)**

(72) Inventeur: **Bouhours, Jean-Paul, 15 Rue du Murier,**
**F-29290 Arrou(FR)**

(74) Mandataire: **Behaghel, Pierre et al, CABINET**
**PLASSERAUD 84 rue d'Amsterdam, F-75009 Paris(FR)**

---

ACTORUM AG

## Description

L'invention est relative aux dispositifs antivibratoires destinés à être interposés aux fins de support et d'amortissement entre deux éléments rigides individuellement soumis à certaines oscillations et/ou vibrations, l'amortissement faisant intervenir au moins dans certaines conditions de fonctionnement le refoulement d'un liquide à travers un passage étranglé.

A titre d'exemple non limitatif, on indique que de tels supports peuvent être montés entre un châssis de véhicule et le moteur à combustion interne de ce véhicule en vue d'amortir aussi bien les oscillations de "hachis" imposées au châssis par les irrégularités et variations de déclivité du sol lors de la circulation du véhicule sur ce sol que les vibrations dues au fonctionnement du moteur, notamment au ralenti ou encore que les chocs appliqués à ce moteur lors de ses démarrages et de ses arrêts par respectivement les premières et les dernières explosions.

L'invention concerne plus particulièrement, parmi les supports du genre en question, ceux qui sont constitués par un boîtier étanche interposé entre les deux éléments rigides, boîtier comportant une embase rigide solidarisable avec l'un des deux éléments rigides, un anneau rigide solidarisable avec l'autre élément rigide, une paroi élastique annulaire de support reliant de manière étanche l'embase à l'anneau et une membrane flexible raccordée de manière étanche à l'anneau, l'intérieur de ce boîtier étant divisé, par une cloison étanche raccordée à l'anneau entre la paroi annulaire et la membrane, en deux chambres, savoir une chambre de travail du côté de la paroi annulaire et une chambre de compensation du côté de la membrane, ces deux chambres communiquant entre elles en permanence par le passage étranglé ci-dessus, lequel est avantageusement constitué par un canal incurvé situé dans la zone de raccordement entre la paroi annulaire et l'anneau, et une masse liquide remplissant les deux chambres ainsi que le passage étranglé.

L'invention vise plus particulièrement encore le cas où la cloison étanche intermédiaire comprend une portion déformable ou mobile formant "clapet" flottant et deux butées mécaniques encadrant axialement ce clapet de façon à limiter l'amplitude de ses débattements à une faible valeur, de préférence inférieure à 0,5 mm.

Avec un tel support, les oscillations ou vibrations créées entre les deux éléments rigides ont pour effet de rapprocher et d'écarter axialement à tour de rôle ces deux éléments l'un de l'autre.

Celles, de ces oscillations, dites de "hachis", qui présentent une fréquence relativement basse (inférieur à 20 Hz) et une amplitude relativement élevée (supérieure à 0,5 mm), ont pour effet de refouler le liquide de l'une des deux chambres dans l'autre à travers le passage étranglé et inversement et, pour une valeur donnée de ladite fréquence dépendant essentiellement des cotes dudit passage, on observe un amortissement élevé des oscillations considérées par effet de résonance de la masse de liquide circulant dans ce passage.

Celles, desdites oscillations, qui présentent une fréquence relativement élevée (supérieure à 20 Hz) et une amplitude relativement faible (inférieure à 0,5 mm) se traduisent par des oscillations correspondantes du clapet sans qu'il y ait véritablement de transfert de liquide à travers le passage étranglé, ce qui a pour effet de filtrer la transmission des oscillations considérées de l'élément rigide où elles sont engendrées à l'autre élément rigide.

Le rôle qui vient d'être signalé du clapet est intéressant pour certaines situations, mais il peut arriver que, dans d'autres circonstances, ce clapet soit le siège de vibrations transitoires indésirables.

C'est par exemple le cas lors de la mise en route ou de l'arrêt du moteur de certains véhicules, pour lesquels le clapet risque de "claquer", c'est-à-dire de subir un déplacement brusque avec émission d'un son intense, s'il n'est pas bloqué.

Pour supprimer ou tout au moins atténuer de telles vibrations indésirables, il a déjà été proposé de limiter provisoirement l'amplitude des débattements du clapet en réglant la position axiale de l'une des deux butées qui l'encadrent axialement et contre lesquelles il vient porter lors de chaque alternance de ses débattements.

Ces réglages sont généralement commandés à l'aide d'électro-aimants, ce qui suppose une constitution au moins partielle en matériau magnétique de la butée à déplacer, voir FR-A 2 547 378, figures 1 à 7.

Une solution mécanique a également été préconisée, le réglage étant alors exercé sur un corps cylindrique solidaire de la butée à déplacer et traversant axialement la membrane, voir FR-A 2 547 378, figure 8. Cette solution est difficile à mettre en oeuvre car les réglages nécessitent des déplacements axiaux de la membrane ; de plus, le corps cylindrique divise la chambre de compensation en deux compartiments coaxiaux distincts qui se comportent différemment lors du fonctionnement du support. D'autres solutions méchaniques ont été proposées dans le document DE-A 3 436 534. Ces solutions ne semblent pas permettre un réglage rapide et précis de l'amplitude des débattements du clapet.

L'invention a pour but, entre autres, de supprimer ces inconvénients.

A cet effet, les supports du genre en question selon l'invention comprennent encore des moyens mécaniques pour régler l'amplitude des débattements du clapet et ces moyens sont essentiellement caractérisés en ce qu'ils comprennent :
- une came rotative immergée dans l'une des deux chambres du support et constituant par elle-même l'une des deux butées qui limitent les débattements du clapet, les amplitudes de ces débattements variant alors d'une valeur maximum à une valeur minimum, éventuellement nulle, en fonction des positions angulaires de la came autour de son axe de rotation excentré, lequel axe est orienté selon une direction perpendiculaire à la direction des débattements du clapet,
- une tige solidaire de la came et traversant la paroi de la susdite chambre à travers un joint étanche,
- et des moyens extérieurs au support permettant de commander les rotations de la tige.

Dans des modes de réalisation avantageux, on a recours en outre à l'une et/ou à l'autre des dispositions suivantes :
- la chambre dans laquelle est immergée la came est la chambre de travail du support,
- la came se présente sous la forme extérieure d'un cylindre excentré par rapport à son axe de rotation,
- le support comprend un second passage étranglé reliant les deux chambres et de préférence évidé dans le siège rigide du clapet et un organe rotatif propre à obturer de façon réglable ce second passage et accouplé à la came rotative ci-dessus de façon telle que le blocage maximum du clapet corresponde à l'ouverture du second passage et que le déblocage maximum de ce clapet corresponde à la fermeture de ce second passage.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

Les figures 1 et 2, de ce dessin, montrent en coupe axiale un support antivibratoire établi selon l'invention, en ses deux états correspondant respectivement au blocage et au déblocage maximum du clapet.

La figure 3 est une coupe partielle à échelle agrandie dudit support selon III-III, figure 1.

Le support considéré est destiné à être interposé verticalement ou selon une direction légèrement inclinée sur la verticale entre un organe porteur rigide constitué par un chassis de véhicule et un organe supporté rigide constitué par un moteur à combustion interne.

Les termes "haut, bas, supérieur, inférieur, cuvette", utilisés dans la description qui suit, le sont à titre d'exemple non limitatif car le support décrit peut parfaitement être utilisé à l'envers du sens adopté pour cette description.

Le support se présente sous la forme générale d'un boîtier étanche de révolution autour d'un axe X comportant :
- un anneau rigide 1 prolongeant horizontalement vers l'extérieur le bord d'une cuvette métallique renversée 2, elle-même susceptible de supporter le moteur d'un véhicule à l'aide d'un goujon 3 en attente dont la tige filetée, s'étendant vers le haut, traverse le centre de ladite cuvette,
- une embase inférieure 4 évidée par des trous borgnes filetés 5 ouverts vers le bas et propres à recevoir des boulons de fixation de cette embase sur le châssis du véhicule,
- une paroi annulaire élastique 6 suffisamment épaisse pour transmettre les charges du moteur au châssis, paroi délimitée en substance par deux surfaces tronconiques évasées vers le haut et dont la petite base, disposée en bas, est adhérée contre l'embase 4, sa grande base supérieure étant raccordée de façon étanche à l'anneau 1,
- et une membrane supérieure étanche et flexible 7 contenue à l'intérieur de la cuvette 2, le bord de cette membrane étant fixé de façon étanche sur l'anneau 1.

Une cloison intermédiaire 8 divise l'intérieur du boîtier ainsi formé en deux chambres, savoir une chambre de travail inférieure A et une chambre de compensation ou d'équilibrage supérieure B.

Le pourtour de la cloison 8 est à cet effet raccordé de façon étanche à l'anneau 1, entre la paroi épaisse 6 et la membrane 7.

Un passage étranglé 9 fait communiquer en permanence les deux chambres A et B entre elles.

Ce passage 9 est ici constitué par au moins un canal incurvé s'étendant selon un arc de cercle autour de l'axe X, canal évidé dans le pourtour de la cloison 8.

La portion centrale de la cloison intermédiaire 8 est constituée par un disque rigide 10 formant clapet.

Ce clapet est monté "flottant" de façon à pouvoir se déplacer, selon la direction de l'axe X, entre deux butées rigides dont l'une est constituée par une rondelle de blocage 11 logée dans une gorge complémentaire de la cloison 8.

Une masse liquide 12 remplit les chambres A et B ainsi que le canal 9, et le clapet 10 est immergé dans cette masse liquide.

Comme bien connu, l'existence de ce clapet 10 permet d'amortir la transmission de certaines vibrations indésirables de l'un des éléments rigides à l'autre, du fait des débattements alors imposés audit clapet par ces vibrations indésirables.

L'invention se propose de réduire, voire d'annuler, l'amplitude des débattements de ce clapet dans certaines autres situations pour lesquelles ces débattements sont eux-mêmes indésirables.

A cet effet l'on immerge dans le support, de préférence dans sa chambre A, une came rotative excentrée 13 dont l'axe de rotation fixe Y coupe l'axe X et s'étend perpendiculairement à cet axe, selon une direction diamétrale du support.

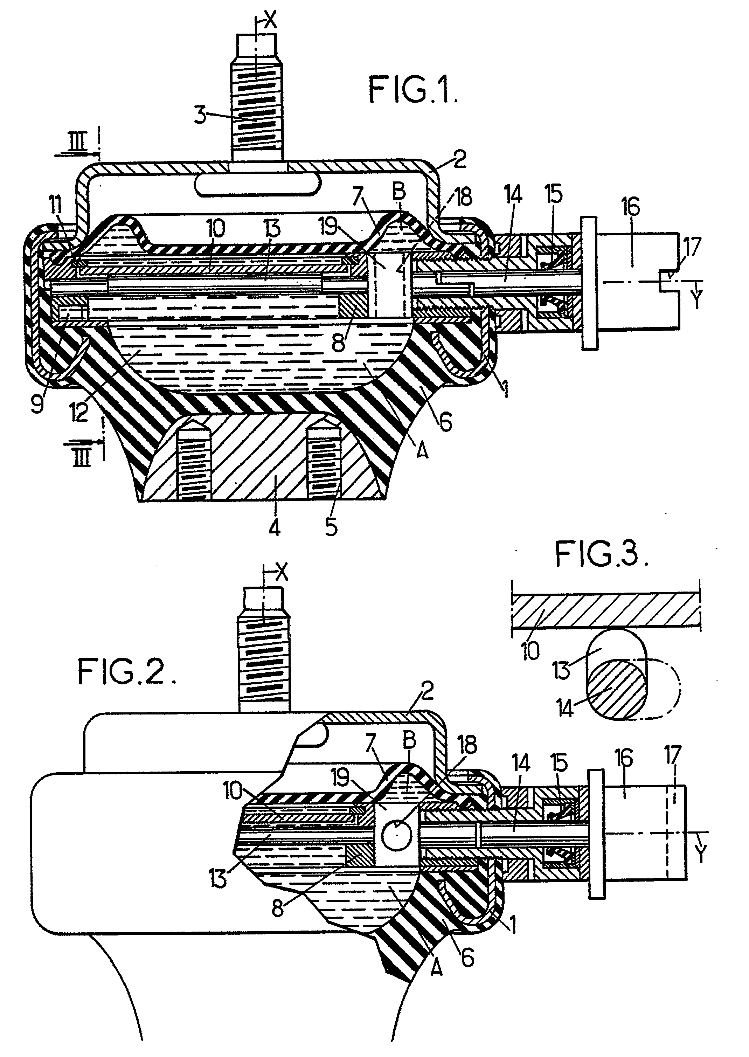

Ladite came 13 est agencée de façon telle :
- que, pour l'une de ses positions angulaires (représentée sur la figure 1 et en traits pleins sur la figure 3), elle vienne en contact avec le clapet 10 tout au long d'un de ses diamètres, en appliquant axialement son pourtour contre la rondelle 11,
- et que, pour une autre position angulaire décalée de 90° par rapport à la précédente (position représentée sur la figure 2 et en traits mixtes sur la figure 3), elle vienne tout en plus en contact avec le clapet aux instants où ce dernier est soumis à ses débattements d'amplitude maximum.

La came 13 est solidarisée avec une tige 14 d'axe Y qui traverse l'anneau 1 à travers un joint d'étanchéité 15 et qui se termine, à l'extérieur du support, par une tête 16 se prêtant à un entraînement en rotation.

Sur les dessins, cette tête 16 est une tête de vis évidée par une fente diamétrale 17.

Mais elle peut être également constituée par un élément accouplé à un organe d'entraînement approprié tel qu'un petit moteur électrique ou autre dont l'excitation est elle-même asservie à l'apparition d'un phénomène rendant désirable ou non le blocage du clapet.

C'est ainsi que, dans un mode de réalisation avantageux, et pour éviter les "claquages" du clapet lors des arrêts et mises en route du moteur, on peut prévoir des moyens pour bloquer le clapet d'une part pendant un temps $t_0$ suivant chaque mise en route du moteur et d'autre part pendant un temps $t_1$ précédant chaque arrêt de ce moteur, ces temps $t_1$ et $t_0$ étant par exemple de l'ordre de la seconde.

Il est à noter en outre qu'entre les deux positions angulaires extrêmes de la came 13 correspondant respectivement au blocage total et au déblocage maximum du clapet 10, il existe une infinité de positions intermédiaires correspondant à des valeurs différentes pour les amplitudes autorisées des débattements du clapet.

Dans le mode de réalisation préféré illustré, on a prévu un second passage étranglé 18 monté en parallèle sur le premier 9 et constitué par un canal court, rectiligne et de section relativement grande, évidé dans la cloison 8 parallèlement à l'axe X.

Plus précisément le canal 18 est évidé dans un tournant cylindrique rotatif 19 lui-même placé dans un logement complémentaire, formant "boisseau", prévu dans la cloison 8 et ce tournant est solidarisé avec la tige 14.

Il résulte de cette solidarisation que les commandes rotatives de la came 13 et celles du tournant 19 sont simultanées et le montage est prévu de façon telle que le blocage total du clapet 10 corresponde à l'ouverture totale du canal 18, le déblocage maximum du clapet 10 correspondant au contraire à la fermeture totale du canal 18.

Pour les positions angulaires, de cet équipage rotatif, comprises entre ces deux positions extrêmes, on observe une ouverture seulement partielle du canal 18, combinée avec un blocage seulement partiel du clapet, c'est-à-dire à une simple limitation des amplitudes des débattements de ce dernier.

Cette progressivité permet de déplacer de manière continue, dans la plage des fréquences des oscillations imposées au support considéré, la valeur, de ladite fréquence, qui correspond à l'amortissement maximum.

C'est ainsi que ladite valeur peut être très petite, et de l'ordre de 5 Hz seulement, lorsque la seconde colonne 18 est totalement obturée et relativement élevée, savoir notamment de l'ordre de 25 à 30 Hz, lorsque cette seconde colonne est totalement dégagée.

Une application intéressante d'un tel couplage est celle, évoquée ci-dessus, pour laquelle le clapet doit être bloqué pendant un temps $t_0$ après chaque début de mise en route du moteur et pendant un temps $t_1$ avant chaque arrêt de ce moteur.

En effet, au cours des périodes considérées, il convient que le support soit agencé de façon à amortir les vibrations qui sont engendrées par le moteur du véhicule tournant au ralenti, à l'arrêt de ce véhicule, et c'est précisément à un tel régime que correspond, dans l'exemple numérique ci-dessus, l'ouverture totale du second canal, synchronisée avec le blocage du clapet.

En suite de quoi, et quel que soit le mode de réalisation adopté, on dispose finalement d'un support antivibratoire dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où le clapet ci-dessus serait remplacé par la portion centrale d'une membrane déformable liée de façon étanche avec le restant rigide de la cloison intermédiaire 8.

**Revendications**

1. Dispositif antivibratoire destiné à être interposé aux fins de support et d'amortissement entre deux éléments rigides, constitué par un boîtier étanche comportant une embase rigide (4) solidarisable avec l'un des deux éléments rigides, un anneau rigide (1) solidarisable avec l'autre élément rigide, une paroi élastique annulaire de support (6) reliant de manière étanche l'embase à l'anneau et une membrane flexible (7) raccordée de manière étanche à l'anneau, l'intérieur de ce boîtier étant divisé par une cloison intermédiaire (8) en deux chambres, savoir une chambre de travail (A) du côté de la paroi annulaire et une chambre de compensation (B) du côté de la membrane, ces deux chambres communiquant entre elles en permanence par un passage étranglé (9), une masse liquide (12) remplissant les deux chambres ainsi que le passage étranglé, la cloison intermédiaire comprenant d'une part une portion mobile ou déformable (10) formant "clapet" flottant et d'autre part deux butées encadrant axialement ce clapet de façon à limiter l'amplitude de ses débattements, et des moyens étant prevus pour limiter l'amplitude des débattements du clapet, caractérisé en ce que ces moyens comprennent une came rotative (13) immergée dans l'une des deux chambres du support et constituant par elle-même l'une des deux butées qui limitent les débattements du clapet (10), les amplitudes de ces débattements variant alors d'une valeur maximum à une valeur minimum, éventuellement nulle, en fonction des positions angulaires de la came autour de son axe de rotation (Y) excentré, lequel axe est orienté selon une direction perpendiculaire à la direction (X) des débattements du clapet, une tige (14) solidaire de la came et traversant la paroi de la susdite chambre à travers un joint étanche (15) et des moyens extérieurs au support permettant de commander les rotations de la tige.

2. Support selon la revendication 1, caractérisé en ce que la chambre dans laquelle est immergée la came (13) est la chambre de travail (A) du support.

3. Support selon l'une quelconque des revendications 1 et 2, caractérisé en ce que la came (13) se présente sous la forme extérieure d'un cylindre excentré par rapport à son axe de rotation (Y).

4. Support selon l'une quelconque des précédentes revendications, caractérisé en ce qu'il comprend un second passage étranglé (18) reliant les deux chambres et de préférence évidé dans le siège rigide annulaire (8) du clapet (10) et un organe rotatif (19) propre à obturer de façon réglable ce second passage et accouplé avec la came rotative ci-dessus (13) de façon telle que le blocage maximum du clapet corresponde à l'ouverture du second passage et que le déblocage maximum de ce clapet corresponde à la fermeture de ce second passage.

5. Support selon l'une quelconque des précédentes revendications, utilisé pour monter un moteur à combustion interne de véhicule sur le châssis de ce véhicule, caractérisé en ce qu'il est associé à des moyens assurant automatiquement le blocage du clapet pendant un court instant après chaque mise en route du moteur et avant chaque arrêt de ce moteur.

## Claims

1. An antivibratory device to be disposed for support and damping purposes between two rigid elements, formed by a sealed case comprising a rigid base (4) fixable to one of the rigid elements, a rigid ring (1) fixable to the other rigid element, a resilient annular supporting wall (6) sealingly connecting the base to the ring and a flexible membrane (7) connected sealingly to the ring, the inside of this case being divided by an intermediate dividing wall (8) into two chambers, namely a work chamber (A) on the annular wall side and a compensation chamber (B) on the membrane side, these two chambers communicating permanently together through a restricted passage (9), a liquid mass (12) filling the two chambers as well as the restricted passage, the intermediate dividing wall comprising on the one hand a mobile or deformable portion (10) forming a floating "valve", and on the other hand two stops axially surrounding this valve so as to limit the amplitude of its movements, and means being provided for limiting the amplitude of the movements of the valve, characterized in that these means comprise a rotary cam (13) immersed in one of the two chambers of the support and forming by itself one of the two stops which limit the movements of the valve (10), the amplitudes of these movements then varying from a maximum value to a minimum value, possibly zero, depending on the angular positions of the cam about its offcentered axis of rotation (Y), which axis is oriented in a direction perpendicular to the direction of movement (X) of the valve, a rod (14) fast with the cam and passing through the wall of the said chamber through a seal (15) and means external to the support for controlling the rotational movements of the rod.

2. Support according to claim 1, characterized in that the chamber in which the cam (13) is immersed is the work chamber (A) of the support.

3. Support according to any one of the claims 1 and 2, characterized in that the cam (13) has the external form of a cylinder excentric with respect to its axis of rotation (Y).

4. Support according to any one of the preceding claims, characterized in that it comprises a second restricted passage (18) connecting the two chambers together and preferably formed in the rigid annular seat (8) of the valve (10) and a rotary member (19) adapted for adjustably closing this second passage and coupled to the above rotary cam (13) so that maximum blocking of the valve corresponds to opening of the second passage and maximum unblocking of this valve corresponds to closure of this second passage.

5. Support according to any one of the preceding claims, used for mounting an internal combustion engine of a vehicle on the chassis of this vehicle, characterized in that it is associated with means providing automatically blocking of the valve for a short time after each start up of the engine and before each stopping of the engine.

## Patentansprüche

1. Gedämpftes Lager, das zur Abstützung und zur Dämpfung zwischen zwei starren Elementen eingefügt ist und aus folgenden Teilen besteht: einem dichten Gehäuse mit einem starren Verbindungsstück (4), das an einem der starren Elemente anbringbar ist, einem starren Ring (1), der an dem anderen Element anbringbar ist, einer ringförmigen elastischen Stützwandung (6), die das Verbindungsstück dicht mit dem Ring verbindet und einer biegsamen Membran (7), die dicht mit dem Ring verbunden ist, wobei der Innenraum des Gehäuses durch eine dazwischenliegende Trennwand (8) in zwei Kammern, nämlich eine Arbeitskammer (A) auf der Seite der ringförmigen Wandung und eine Kompensationskammer (B) auf der Seite der Membran unterteilt ist, die beiden Kammern miteinander dauernd über eine verengte Durchgangsöffnung (9) miteinander in Verbindung stehen, die beiden Kammern sowie die verengte Durchgangsöffnung mit einem flüssigen Medium (12) gefüllt sind und die Trennwand einerseits einen beweglichen oder deformierbaren Abschnitt (10), der ein schwimmendes oder flatterndes "Ventil" bildet und andererseits zwei Anschläge enthält, zwischen denen das Ventil axial eingeschoben ist, um den Ausschlag der Schwingbewegungen zu begrenzen und wobei ferner Mittel vorgesehen sind, um die Amplitude der Schwingungen des Ventils zu begrenzen, dadurch gekennzeichnet, daß diese Mittel aus folgenden Teilen bestehen: einem drehbaren Nocken (13), der in eine der beiden Kammern des Lagers eingesteckt ist und seinerseits einen der beiden Anschläge bildet, die die Schwingungen des Ventils (10) begrenzen, wobei sich die Amplituden der Schwingungen in Abhängigkeit von den Winkelstellungen des Nockens um seine exzentrisch angeordnete Drehachse (Y) von einem maximalen Wert bis auf einen minimalen Wert, der gegebenenfalls Null sein kann, und die Achse (Y) sich in einer senkrecht zur Richtung (X) der Schwingungen des Ventils verlaufenden Richtung erstreckt, einer Stange (14), die fest mit dem Nocken verbunden ist und die Wandung der Kammer durch eine Dichtung (15) durchdringt und Einrichtungen, die außerhalb des Lagers angeordnet sind, und mit denen die Drehbewegungen der Stange steuerbar sind.

2. Lager nach Anspruch 1, dadurch gekennzeichnet, daß die Kammer, in die der Nocken (13) eingesteckt ist, die Arbeitskammer (A) des Lagers ist.

3. Lager nach einem der Ansprüche 1 und 2, dadurch gekennzeichnet, daß die Außenfläche des Nockens (13) die Form eines Zylinders hat, der in bezug auf die Drehachse (Y) exzentrisch ausgebildet ist.

4. Lager nach einem der vorhergehenden Ansprüche, dadurch gekennzeichnet, daß eine zweite verengte Durchgangsöffnung (18) vorgesehen ist, die die beiden Kammern miteinander verbindet und vorzugsweise in dem starren ringförmigen Sitz (8) des Ventils (10) ausgebildet ist und daß das Lager ein drehbares Teil (19) enthält, mit dem die zweite Öffnung regulierbar verschlossen werden kann und das mit dem drehbaren Nocken (13) so verbunden ist, daß die zweite Durchgangsöffnung bei maximalem Verschluß des Ventils offen und bei maximaler Entblockierung des Ventils verschlossen ist.

5. Lager nach einem der vorhergehenden Ansprüche zur Befestigung des Verbrennungsmotors eines Kraftfahrzeuges an dessen Fahrgestell, dadurch gekennzeichnet, daß das Lager mit Einrichtungen versehen ist, die das Ventil kurzfristig nach jedem Start und vor jedem Abstellen des Motors automatisch blockieren.

FIG.1.

FIG.3.

FIG.2.